# EUROPEAN PATENT APPLICATION

(11) **EP 4 814 744 A1**
(43) Date of publication of application: **30.09.2026**
(21) Application number: 25166279.7
(22) Date of filing: 26.03.2025
(51) Int. Cl.: G06F 16/3329, G06F 16/3349

(54) **ANSWERING QUERIES**

(71) Applicant: Koninklijke Philips N.V., 5656 AE Eindhoven (NL)
(72) Inventor: BULUT, Murtaza, Eindhoven (NL); EISENHARDT, Marc, Eindhoven (NL); PFEIFFER, Dominique, Eindhoven (NL); PETKOVIC, Milan, Eindhoven (NL)
(74) Representative: Philips Intellectual Property & Standards

(57) **Abstract**

Proposed concepts thus aim to provide schemes, solutions, concepts, designs, methods and systems pertaining to answering queries. In particular, embodiments aim to provide a method for answering queries by generating both a primary answer and an auxiliary answer in response to a first query, and wherein in response to a second query, the auxiliary answer can first be consulted to check if it is relevant to the second query, in which case a new answer can be output without having to fully run the model again, thus saving time and processing power.

## Description

### FIELD OF THE INVENTION

This invention relates to the field of answering queries.

### BACKGROUND OF THE INVENTION

One of the main problems with generative AI-based applications (e.g., RAGs) is that the output can be inaccurate or incomplete. This can be particularly problematic for healthcare applications, especially in cases where the query can relate to multiple sources of information describing different applications (e.g., mobile vs. desktop). For example, when a user then has to send a follow-up query to attempt to receive the output they were expecting, they have to wait again for the LLM to run. In a clinical setting, time is very important, and the delay of clinical actions may result in undesired outcomes.

This problem is particularly prevalent when documents and/or data retrieved by the generative AI-based application offer alternative answers to the query, as the output has a significant chance of not being relevant (i.e., the "correct" answer) to the query.

### SUMMARY OF THE INVENTION

The invention is defined by the claims.

According to examples in accordance with an aspect of the invention, there is provided a computer-implemented method for answering queries.

The method comprises: providing a first query from an agent to a large language model, LLM, based model to generate a primary answer and at least one auxiliary answer; outputting the primary answer to the agent and storing the at least one auxiliary answer; obtaining a second query from the agent; determining if at least one of the at least one auxiliary answers is relevant to the second query; and if at least one of the at least one auxiliary answers is relevant to the second query, generating and outputting a second answer based on said relevant at least one auxiliary answer to the agent, and storing any remaining auxiliary answers.

Proposed concepts thus aim to provide schemes, solutions, concepts, designs, methods and systems pertaining to answering queries. In particular, embodiments aim to provide a method for answering queries by generating both a primary answer and an auxiliary answer in response to a first query, and wherein in response to a second query, the auxiliary answer can first be consulted to check if it is relevant to the second query, in which case a new answer can be output without having to fully run the model again, thus saving time and processing power.

By separating the generated output of a model into a primary answer and at least one auxiliary answer, a user/machine agent can be presented with an initial answer (and not be overwhelmed by multiple answers or too much detail), but if the initial answer does not satisfy them and they ask a follow-up query, the at least one auxiliary answer can be used (if relevant) to quickly provide a follow-up answer without having to run the model again. **In** this way, a more efficient use of the model is provided, saving time if a follow-up query is asked by an agent.

Ultimately, an improved method for answering queries is provided.

**In** some embodiments, generating and outputting the second answer may comprise outputting said relevant at least one auxiliary answer to the agent. This provides a particularly efficient implementation, not requiring any further processing in order to generate the second answer.

In some embodiments, the at least one auxiliary answer may comprise two auxiliary answers, wherein the two auxiliary answers are both relevant to the second query, and wherein generating the second answer comprises generating a second answer based on the two relevant auxiliary answers. This allows information across multiple auxiliary answers to be combined into the second answer if relevant information is spread across multiple auxiliary answers.

In some embodiments, the LLM based model may comprise a Retrieval Augmented Generation, RAG, model comprising a plurality of LLMs. A RAG model comprising multiple LLMs may be a particularly useful form of LLM-based model for generating multiple answers to a query, especially in cases where specific documents need to be consulted.

In some embodiments, providing the first query to the RAG model to generate a primary answer and at least one auxiliary answer may comprise: retrieving a plurality of chunks from at least one reference document; modifying the first query to generate a plurality of modified first queries; providing the plurality of chunks and a different one of the plurality of modified first queries to each of the plurality of LLMs to generate respective outputs; and generating the primary answer and the at least one auxiliary answer based on the generated output of each LLM. This may force the LLMs to generate different answers from one another such that auxiliary answers can include additional/alternative information not in the primary answer.

In some embodiments, providing the first query to the RAG model to generate a primary answer and at least one auxiliary answer may comprise: retrieving a plurality of chunks from at least one reference document; clustering the plurality of chunks into a plurality of clusters; providing the first query and a different one of the plurality of clusters to each of the plurality of LLMs to generate respective outputs; and generating the primary answer and the at least one auxiliary answer based on the generated output of each LLM. This may allow the LLMs to generate different answers based on different information, thus naturally resulting in a variety of information in the answers.

In some embodiments, the primary answer may comprise the generated output of a single one of the LLMs, and the at least one auxiliary answer may comprise the generated output of the remaining one or more LLMs of the plurality of the LLMs. This may provide a particularly efficient way to generate the primary and auxiliary answers from the outputs of the LLMs.

In some embodiments, the primary answer may comprise a summary of the generated outputs of the plurality of LLMs and the at least one auxiliary answer may comprise the details of the generated outputs of the plurality of LLMs. This may provide a particularly useful for the structure of the primary and auxiliary answers such that an agent can first be provided with an overview, and then only if they request additional information will they be provided with the requested detail, thus not initially overwhelming them.

In some embodiments, the method may further comprise: selecting, by the agent, one of the plurality of clusters; and wherein the primary answer comprises the generated output of the LLM to which the selected cluster was input, and the at least one auxiliary answer comprises the generated output of the remaining one or more LLMs of the plurality of the LLMs. This may improve the chances of the primary answer being relevant to the agent in the first place, allowing them to specifically pick the cluster of information on which to base the primary answer while still allowing auxiliary answers to be generated on other clusters which may still include useful additional information (or be relevant due to the agent selecting the wrong cluster, for example).

In some embodiments, a conversation history between the RAG model and the agent may be further provided to each of the plurality of LLMs to generate the respective outputs. This may allow the RAG model to produce more relevant answers.

In some embodiments, clustering the plurality of chunks may comprise performing natural language processing on the chunks to determine the semantic content of each chunk; and clustering the plurality of chunks based on the semantic content of each chunk. This may be a particularly effective way of clustering the chunks.

In some embodiments, determining if at least one of the at least one auxiliary answers is relevant to the second query may comprise: performing a keyword search on each of the at least one auxiliary answers based on the second query. This may be a particularly efficient way of determining the relevancy of the auxiliary answers.

In some embodiments, determining if at least one of the at least one auxiliary answers is relevant to the second query may comprise: performing natural language processing on each of the at least one auxiliary answers and the second query to determine, for each of the at least one auxiliary answers, a similarity score indicating the semantic similarity between said auxiliary answer and the second query; and determining if at least one of the at least one auxiliary answers is relevant to the second query based on their respective similarity scores. This may be a particularly effective and reliable way of determining the relevancy of the auxiliary answers.

According to another aspect of the invention, there is provided a computer program product comprising computer program code means which, when executed on a computing device having a processing system, cause the processing system to perform all the steps of the method of any herein disclosed method.

According to another aspect of the invention, there is provided a system for answering queries. The system comprises a processing arrangement configured to: provide a first query from an agent to a large language model, LLM, based model to generate a primary answer and at least one auxiliary answer; output the primary answer to the agent and storing the at least one auxiliary answer; obtain a second query from the agent; determine if at least one of the at least one auxiliary answers is relevant to the second query; and if at least one of the at least one auxiliary answers is relevant to the second query, generate and output a second answer based on said relevant at least one auxiliary answer to the agent and storing any remaining auxiliary answers.

Thus, there may be proposed concepts for answering queries, and this may be done based on generating a primary answer and one or more auxiliary answers in response to a first query, wherein the primary answer is output and the one or more auxiliary answers are stored to be consulted in response to a second, follow-up query.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method for answering queries according to a proposed embodiment;
Fig. 2 is a flow diagram of a method for answering queries according to a proposed embodiment;
Fig. 3 is a flow diagram of a method for answering queries according to a proposed embodiment;
Fig. 4 is a flow diagram of a method for answering queries according to a proposed embodiment;
Fig. 5 is a block diagram of a system for answering queries according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to answering queries. According to proposed concepts, a number of possible solutions may be implemented separately or jointly. That is, although these possible solutions may be described below separately, two or more of these possible solutions may be implemented in one combination or another.

Embodiments of the invention aim to provide a method for answering queries. This can be achieved by generating both a primary answer and an auxiliary answer in response to a first query, and wherein in response to a second query, the auxiliary answer can first be consulted to check if it is relevant to the second query, in which case a new answer can be output without having to fully run the model again, thus saving time and processing power.

By separating the generated output of a model into a primary answer and at least one auxiliary answer, a user/machine agent can be presented with an initial answer (and not be overwhelmed by multiple answers or too much detail), but if the initial answer does not satisfy them and they ask a follow-up query, the at least one auxiliary answer can be used (if relevant) to quickly provide a follow-up answer without having to run the model again. In this way, a more efficient use of the model is provided, saving time if a follow-up query is asked by an agent.

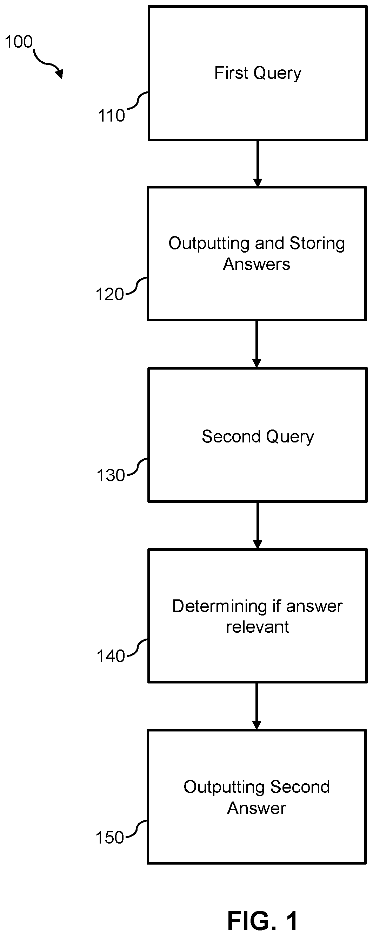

Referring now to Fig. 1, there is depicted a simplified flow diagram of a computer-implemented method 100 for answering queries according to a proposed embodiment.

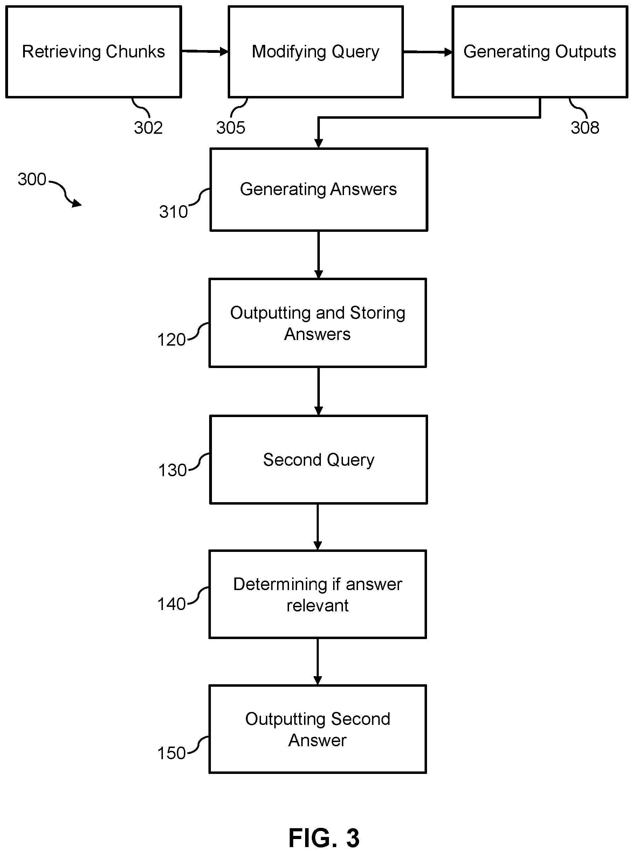

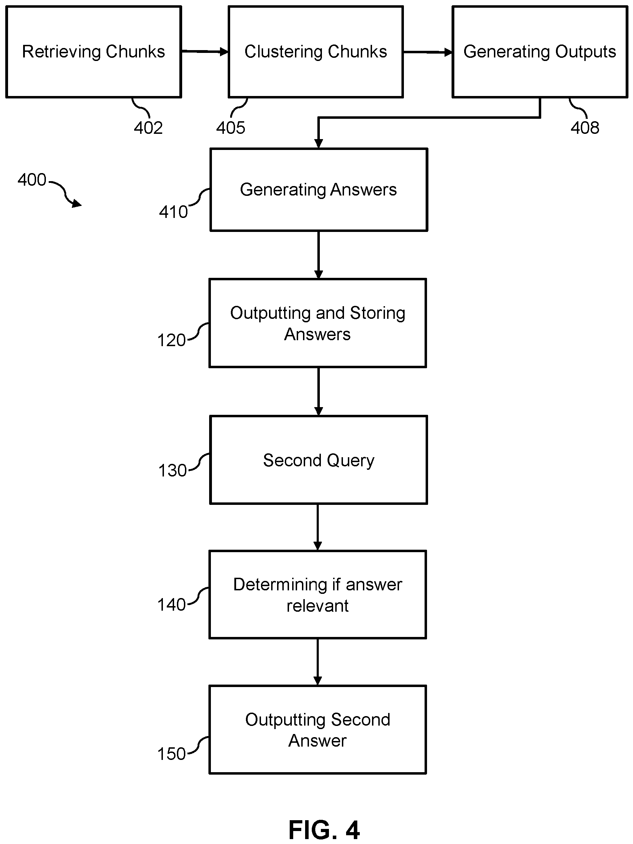

The method 100 begins with the step 110 of providing a first query from an agent to a large language model, LLM, based model to generate a primary answer and at least one auxiliary answer. The first query can be alternatively referred to as a first question or a first input - the query does not have to explicitly be a question, but rather merely an input which the LLM-based model is expected to process or to respond to. An agent can be understood as either a human user or a machine agent (e.g., software, a system, an AI model, etc.). In some embodiments, the LLM-based model consists of a single LLM. In other embodiments (as will be seen in relation to Figs. 3 and 4, for example), the LLM-based model can comprise multiple LLMs, for example, adapted to run in parallel. The primary and auxiliary answer(s) can be generated as separate outputs of the LLM-based model or can be generated together in a single output of the LLM-based model and then subsequently segregated into a primary answer and one or more auxiliary answers.

It should be noted that, in some embodiments, the one or more auxiliary answers may not be direct answers to the first query (e.g., alternative direct answers to the primary answer) but rather may merely be additional information that is relevant to the query and/or to the primary answer.

Step 120 comprises outputting the primary answer to the agent and storing the at least one auxiliary answer. Outputting the primary answer to the agent can be understood as communicating the primary answer to the agent in any suitable way, e.g., via display on a screen or via an audio speaker, via signal/data to a software process, as an input to an AI model, etc. Storing the at least one auxiliary answer can be understood as not directly outputting the primary answer to the agent but instead storing the auxiliary answer(s) in a memory not directly accessible to the agent and/or hiding the auxiliary answer(s) from the agent in a way in which they could view/obtain it if they desired and actively acted to do so (e.g., via a button or a command).

Step 130 comprises obtaining a second query from the agent. For example, the agent can write or speak another question / input for the LLM-based model.

Step 140 comprises determining if at least one of the at least one auxiliary answer is relevant to the second query, i.e., determining if at least one of the one or more auxiliary answers contains information which could help answer the second query.

In this embodiment, determining if at least one of the at least one auxiliary answer is relevant to the second query comprises performing a keyword search on each of the at least one auxiliary answers based on the second query. This is a particularly efficient way of determining the relevancy of the auxiliary answers. In other embodiments, however, as the skilled person would be aware, other suitable methods of determining the relevancy of the auxiliary answer(s) can be used.

If at least one of the one or more auxiliary answers is found to be sufficiently relevant to the second query (e.g., with a relevancy score above a predetermined threshold and/or with a number of keyword matches above a predetermined threshold), the method 100 moves on to step 150. If none of the auxiliary answers are relevant to the second query, the method 100 begins again from step 110. Step 150 comprises generating and outputting a second answer based on said relevant at least one auxiliary answer to the agent, and storing any remaining auxiliary answers. For example, if there are three auxiliary answers and the first is found to be relevant to the second query, the first auxiliary answer is used to generate a second answer (e.g., the second answer may simply be the first auxiliary answer or it may comprise only the relevant portion of the first auxiliary answer), which is then output to the agent with the irrelevant second and third auxiliary answers stored again. If, for example, all three of the auxiliary answers are found to be relevant, the second answer will be generated based on all three of the auxiliary answers (e.g., it may be a combination of all three auxiliary answers or a summary of the three auxiliary answers may be generated), and no auxiliary answers stored. In summary, the second answer can be a portion of the one of the auxiliary answers, the whole of one of the auxiliary answers, one or more portions of multiple auxiliary answers or one or more entire auxiliary answers. The second answer can further be based on the first answer, e.g., to refine it or rewrite it but with the supplementary information from the auxiliary answer(s) now included.

In this embodiment, generating and outputting the second answer (i.e., step 150) comprises outputting said relevant at least one auxiliary answer to the agent. This provides a particularly efficient implementation, not requiring any further processing in order to generate the second answer. In other embodiments, however, where, for example, the at least one auxiliary answer comprises two auxiliary answers and both are relevant to the second query, generating the second answer can comprise generating a second answer based on the two relevant auxiliary answers (e.g., generating a summary of the information provided in both relevant auxiliary answers or succinctly combining them to avoid repeated information). This allows information across multiple auxiliary answers to be combined into the second answer if relevant information is spread out across multiple auxiliary answers.

In case the auxiliary answers are only partially relevant, embodiments may generate the missing parts (again speeding up the output generation). For such cases, there may be different options considered for output display: i) To output the relevant parts from the auxiliary answer(s) and at the same time start generating output related to missing parts; or (ii) not show any output until the output for the missing part(s) is generated. For generation of the missing parts, the full scale LLM may be used. However, a faster LLM (e.g. smaller size LLM) may be employed if speed is important/critical.

Furthermore, the decision of how to generate the incomplete parts of the auxiliary answer can be determined based on the size of the incompleteness. For mostly completed auxiliary answers, faster LLMs can be selected to generate the missing parts.

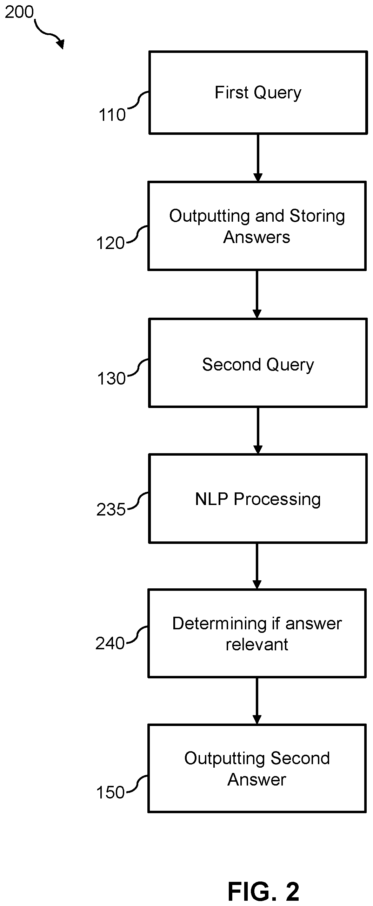

Referring now to Fig. 2, there is depicted a flow diagram of a computer-implemented method 200 for answering queries according to a proposed embodiment. Steps 110, 120, 130, and 150 are substantially the same as have already been described in relation to method 100 of Fig. 1.

Compared to method 100, in method 200, step 140 has essentially been replaced by steps 235 and 240 for determining the relevancy of the one or more auxiliary answers to the second query. Step 235 comprises performing natural language processing on each of the at least one auxiliary answers and the second query to determine, for each of the at least one auxiliary answers, a similarity score indicating the semantic similarity between said auxiliary answer and the second query. As the skilled person would appreciate, semantic similarity refers to the degree to which two pieces of text or concepts share meaning, regardless of their exact wording. Furthermore, as the skilled person would appreciate, natural language processing (NLP) is a field of AI that enables computers to understand, interpret, and generate human language.

Step 240 comprises determining if at least one of the at least one auxiliary answers is relevant to the second query based on their respective similarity scores. For instance, it can be determined that an auxiliary answer is relevant if its similarity score is above a predetermined threshold. This is a particularly effective and reliable way of determining the relevancy of the auxiliary answers.

Referring now to Fig. 3, there is depicted a flow diagram of a computer-implemented method 300 for answering queries according to a proposed embodiment. Steps 120, 130, 140 and 150 are substantially the same as have been described in relation to the method 100 of Fig. 1.

Compared to method 100, step 110 has essentially been replaced by steps 302, 305, 308 and 310 in order to generate a primary answer and at least one auxiliary answer based on a first query from an agent.

In this embodiment, the LLM-based model comprises a Retrieval Augmented Generation (RAG) model comprising a plurality of LLMs. A RAG model comprising multiple LLMs is a particularly useful form of LLM-based model for generating multiple answers to a query, especially in cases where specific documents need to be consulted. Retrieval-Augmented Generation (RAG) is an advanced AI framework that integrates retrieval-based and generation-based methodologies to enhance the accuracy and relevance of generated responses. It operates by first retrieving pertinent information from an external knowledge base, such as structured databases, document repositories, or real-time search engines, and subsequently incorporating this data as contextual input for a generative language model. This augmentation enables the model to synthesize responses that are not only informed by its pre-trained knowledge but also grounded in up-to-date and domain-specific information, thereby mitigating issues such as hallucination and factual inconsistency. RAG is particularly advantageous in applications requiring high precision and real-time adaptability, such as in clinical settings.

It should be noted that in other embodiments, the RAG can include only a single LLM. In this case, the multiple LLMs referred to in this method 300 and method 400 can then essentially be replaced by the single LLM running multiple times (in sequence) in order to essentially build up the respective outputs.

Step 302 comprises retrieving a plurality of chunks from at least one reference document. As the skilled person would understand, a chunk can be understood as any combination and size of content available in the document, e.g. a paragraph, passage, and/or page of a document, i.e., a portion of a document. The at least one reference document is a document which the RAG has access to and could be, for example, an instruction manual or a textbook.

Step 305 comprises modifying the first query to generate a plurality of modified first queries. For instance, the first query can be modified such that each modified first query instructs the LLM to focus on a different aspect of the query. In another example, the first query is modified in one instance to instruct the LLM to provide a summary of the answer (intended to form the basis of the primary answer), and modified in another instance to instruct the LLM to be very detailed (intended to form the basis of the one or more auxiliary answers). The skilled person would be aware of the myriad ways in which the first query could be modified to prompt the LLMs into generating different outputs from one another.

Here, it is noted that the concept of modifying queries to generate different answers is not restricted to a RAG architecture. It can be applied to any LLM. Where RAG architecture is not employed, the step 302 of retrieving chunks may not be required.

In step 308, the plurality of chunks and a different one of the plurality of modified first queries is provided to each of the plurality of LLMs to generate respective outputs. Optionally, the conversation history between the RAG model and the agent can further be provided to each of the plurality of LLMs to generate the respective outputs. This may allow the RAG model to produce more relevant answers.

Step 310 comprises generating the primary answer and the at least one auxiliary answer based on the generated output of each LLM. This methodology essentially forces the LLMs to generate different answers from one another such that auxiliary answers can include additional/alternative information not in the primary answer.

In this embodiment, the primary answer, in fact, comprises the generated output of a single one of the LLMs, and the at least one auxiliary answer comprises the generated output of the remaining one or more LLMs of the plurality of the LLMs. This provides a particularly efficient way to generate the primary and auxiliary answers from the outputs of the LLMs.

In other embodiments, however, the primary answer comprises a summary of the generated outputs of the plurality of LLMs and the at least one auxiliary answer comprises the details of the generated outputs of the plurality of LLMs. This provides a particularly useful for the structure of the primary and auxiliary answers such that an agent can first be provided with an overview, and then only if they request additional information will they be provided with the requested detail, thus not initially overwhelming them. In yet other embodiments, the output of each LLM may be combined to generate each of the primary and one or more auxiliary answers in different combinations.

Referring now to Fig. 4, there is depicted a computer-implemented method 400 for answering queries according to a proposed embodiment. Steps 120, 130, 140 and 150 are substantially the same as have been described in relation to the method 100 of Fig. 1.

Compared to method 100, step 110 has essentially been replaced by steps 402, 405, 408 and 410 in order to generate a primary answer and at least one auxiliary answer based on a first query from an agent. Steps 402 and 410 are substantially the same as steps 302 and 310 respectively, as described in relation to method 300 of Fig. 3.

In this embodiment, the LLM-based model comprises a RAG model comprising a plurality of LLMs. Step 405 comprises clustering the plurality of chunks (retrieved in step 402) into a plurality of clusters. As the skilled person would appreciate, this can be done in many suitable ways. However, in this embodiment, clustering the plurality of chunks specifically comprises performing natural language processing on the chunks (and/or any meta-data that is linked or generated related to chunks) to determine the semantic content of each chunk; and clustering the plurality of chunks based on the semantic content of each chunk (i.e., such that chunks with similar semantic content are clustered together). For example, as a part of the chunking and embedding process, additional data describing the context and relation of the chunk to other chunks can be generated. Such information can be considered as a part of the chunk, and can be used for any processing (such as clustering) applied to chunks. This is a particularly effective way of clustering chunks. It should be noted that there may or may not be overlap between the content of the different clusters.

Step 408 comprises providing the first query and a different one of the plurality of clusters to each of the plurality of LLMs to generate respective outputs. This allows the LLMs to generate different answers based on different information, thus naturally resulting in a variety of information in the answers. It should be noted that in some embodiments, each cluster may contain only one chunk, i.e., step 405 can be skipped and each of the plurality of LLMs simply provided with a different one of the retrieved chunks each.

In some embodiments, an additional step is provided (not shown) between steps 405 and 408 comprising selecting, by the agent, one of the plurality of clusters. For instance, the agent is provided with indications of the clusters of chunks (e.g., a summary of the information in each cluster or simply a title / label for the cluster, e.g., the title of the section of the document the clustered chunks came from or even the title of the document they came from) and is then able to select the cluster they believe is most likely to be relevant to their query. In step 410, the primary answer is generated such that it comprises (or at least is based on) the generated output of the LLM to which the selected cluster was input, and the at least one auxiliary answer is generated such that it comprises (or at least is/are based on) the generated output of the remaining one or more LLMs of the plurality of the LLMs.

It should be noted that in some embodiments, steps 305, 308, 405, and 408 can essentially be combined such that each of the plurality of LLMs is provided with a unique modified query and a unique cluster, thus enhancing the diversity of answers from the LLMs.

In summary, in known RAG architectures, for instance, the generated answer may be missing key details which can be especially problematic for healthcare applications as it can delay clinical actions and/or result in clinical errors. This problem may occur, for instance, when retrieved (source) documents include several alternative answers to an agent query. For example, if the agent query is not detailed or specific enough, current systems can fail to provide an accurate answer because they would typically select and use one of the matching chunks when generating the answers. In some cases, it can be obvious that the answer is wrong, however, if the generated answer does not include key details, it may not be immediately clear to the agent that the answer is wrong. Especially in clinical contexts, such 'undetected' errors can have serious consequences.

In an example situation, a agent queries a model: "How to annotate and save a strip?". The model answers them with a list of steps but negates to include which application to perform the steps in. With the present invention, however, the application being used could be stored as an auxiliary answer such that if the agent follows up with the query: "Which application should I use?", they can be provided with the information quickly without the model having to run again.

In an example of the invention, the main elements could be considered to be: clustering the retrieval output (chunks, pages, etc.); running separate LLMs for different clusters (or the same LLM multiple times on different clusters); combining and selecting the answers from the different LLMs while interacting with the agent; and classifying the RAG output as visible (the answer presented to the agent) and auxiliary/augmented/indirect (the invisible to agent meta-answer which can be subsequently provided to an agent when needed).

Turning now to a specific exemplary use of the invention, the processing flow starts with an agent (e.g., human user or machine agent) query. The query will typically be a question, e.g., "How can I set the alarm limits?"

Chunk retrieval occurs next which comprises generating embeddings, searching a vector database, and retrieving relevant chunks (e.g., from one or more documents). Different implementations are also possible, where for example, instead of chunks (e.g., passages / paragraphs), full pages are retrieved. For simplicity, the term chunks can be considered to include full pages as well as passages/paragraphs.

Linked to the retrieved chunks, supplementary information can also be included. For example, for each chunk, the page number can also be recorded. If available, for each chunk section, the name of the source document can also be recorded.

As well as other meta-data related to the chunks. The meta data can be extracted from the document itself (e.g., page number, section number, etc.) or can be generated (e.g. by using generative AI based techniques describing the content and relation of the chunk to this context for example).

In a next step, it is decided whether the retrieved chunks need clustering. In a basic implementation, the check can be based on pre-defined rules, for example: if the chunks are from two or more different pages, clustering is needed; or if the chunks are from two or more different sections of a document, clustering is needed. Alternatively or additionally, simple natural language processing (NLP) techniques can be applied to determine how semantically similar/dissimilar the chunks are from each other. For example, features such as term frequency, sentence length, similar measures, TF-IDF (term frequency-inverse document frequency), latent semantic analysis, BERT, etc. can be extracted per chunk and compared. If the difference between the chunks is above a pre-defined threshold, clustering is needed.

It is also possible to simply assume that clustering is always needed thus not wasting processing resources on this decision.

In the next step of clustering and determining cluster labels, unsupervised clustering techniques can be used to cluster chunks into different groups. The clustering can be very simple, based on pre-defined rules. For example: group all chunks with the same page number; or group all chunks with the same section number. Alternatively, NLP techniques can be used, for example, K-means clustering or hierarchical clustering (as the skilled person would know, many other options are also available). For K-means clustering, the number of clusters must be pre-defined. In the present case, the number can be defined based on: number of different sections (e.g., one cluster per section); number of different pages (e.g., one cluster per 2 pages); or total number of chunks (e.g., one cluster per X number of chunks, where X can be set according to chunk size). For hierarchical clustering, there is no need to pre-define the number of clusters. Note that there may or may not be overlap between contents of the different clusters.

When the clusters are determined, NLP algorithms can be used to extract keywords or the topic of the cluster. Here, embedding-based methods such as KeyBERT can be used. Alternatively, a lower scale/complexity LLM can be used. Alternatively, keywords from the source document can be used, or, for example, if the clustering is based on sections, then the section names can be used as the corresponding cluster names.

Next, the user/agent is asked to select the topic, i.e., to refine their query by selecting one of the clusters from the previous step (using the cluster names). For instance, the prompt to the agent could be: "I found that your question can be related to more than one application. Which of the following applications are you interest in: (i) [Cluster name 1], (ii) [Cluster name 2]?" This step may be skipped and instead it may be simply assumed which is the most relevant cluster - alternatively, no cluster may be singled out and instead, the answer output to the agent may be a combination of the outputs generated using all the clusters.

In the next step, the query is combined with the chunks in the selected cluster (and optionally the conversation history) to generate a prompt which will be the input for the model (e.g., the one or more LLMs). If needed, input guardrails can be applied. A separate prompt per cluster is generated.

Subsequently, the generated prompts are used as input to the LLMs. Each LLM (with a unique prompt, including a unique cluster) generates a different output. The output generated using the chunks selected by the agent (i.e., the selected cluster) is called the primary answer and it is communicated to the agent. The outputs generated using the chunks (clusters) not selected by the agent are called meta-answers. They are not immediately communicated to the agent - instead they are stored as meta/auxiliary data for the primary answer. As described above, in some embodiments, the agent may not select a particular cluster and instead the primary answer can be a combination of the different outputs into one comprehensive response - the meta-answer may then include more specific details. This approach may increase the likelihood of the initial primary answer being at least somewhat relevant.

Of course, the agent may have follow-up / additional questions. The typical flow of the model can be followed to answer these questions (i.e., running the LLMs again), however, importantly, it should first be checked whether the answer is already available in the meta-answers. For example, the meta-answers could be considered as analogous to a list of frequently-asked questions and corresponding answers, and if the question is already available in the FAQs then there is no need to regenerate it. This check/search can be done using the same/similar NLP algorithms mentioned above. The answer to the new agent question can then be selected from the meta-answer and the remaining data in the meta-answer stored as new meta-data. This process can then be repeated for additional follow-up queries.

In an alternative specific exemplary use of the invention, a query is received from a user/agent. A pre-set meta-data query is also generated to instruct the system to generate specific meta data for specific field and meta-data generation instructions. An example of a pre-set field could be, for example, "software_name", in which case the meta-data (i.e., auxiliary answer) for the query would include the relevant software name. An example of a meta-data generation instruction could be, for example: "Include all types of applications/software related information which may be relevant for the query and answer".

Chunks can then be retrieved by generating embeddings, searching a vector database, and retrieving the relevant chunks. Two searches are then conducted. The first search is done based on the agent query and the second search is done based on the meta-data query.

The agent query, meta-data query, retrieved chunks, and conversation history can then be combined to generate a single first input which will be input into the model (e.g., an LLM). Again, if needed, input guardrails can be applied.

The model will then generate a first answer, containing: an answer to the agent's question; meta-data corresponding to the pre-set fields (e.g., "software_name"); and instructions (questions/query) for additional meta-data generation (this can be referred to as dynamic meta-data because it can vary depending on the answer). The meta-data generation instructions are then used as a new input to retrieve further relevant chunks.

The generated first answer, the initial relevant chunks, the further relevant chunks (retrieved using the meta-data generation instructions), and the conversation history are then combined to generate a second prompt. In the second prompt, there is a specific instruction to improve the agent answer of the first answer, taking into account the further relevant chunks. There are also instructions to separate the answer into a primary answer (an agent answer) and meta-data (an auxiliary answer). The model will then generate a final answer including a final agent answer, which is communicated to the agent, and final meta-data which is stored as meta-data for the answer.

As would be apparent to the skilled person, the present invention is advantageous to existing generative AI systems in a range of applications. In a first example, the present invention can be used to check generated answers for missing details. For example, instruction for use (IFU) documents can contain information related to multiple software versions. In other words, in view of this, an agent query can be ambiguous and relevant to different applications. By forcing the system (e.g., a chatbot) to generate one or more auxiliary answers (i.e., meta-answers), these can then be used to improve the answer thus alleviating issues related to missing key information.

For example, using the proposed invention, a query could be answered as follows:
Agent query: How to annotate and save a strip?
System processing: chunks retrieved from document (pdf1) -> chunks clustered for different products covered in the document (application_1, application_2, application_3) -> prompts generated for using each of the three clusters -> three LLMs run in parallel and three answers generated - > final answer generated.
Primary answer: In which of these {list the 3 applications} are you interested? Meta-answer: {the generated answers}.
Agent query: application_1
Primary answer: {answer corresponding to application_1}. Meta-answer: {the answers generated for the other applications}.

In another example, the information from the outputs of the parallel LLMs can be used to check the accuracy of the primary answer, e.g., to ensure that it is consistent with the auxiliary answer(s).

In another example, when an agent asks a question related to protocol guidance, the system can ask for clarification while generating meta-answers with different alternatives (so as to be ready to output one of them once the agent clarifies). Clinical guidelines (and hospital protocol which are derived from these guidelines) are documents that describe in detail how different patient conditions can be treated. They can be considered as documents describing different decision trees with many different paths, decision trees related to clinical procedures. For example, if vital_1>x do action1, else wait. If wait_time>y, and vital_2<z do action2 and so on. The complexity arises from the fact that these documents contain many different alternatives and there is a large margin of variability in when and how different procedures can be applied. Typical generative AI is not able to cope well with documents with high variability (due to different alternatives). To deal with this situation, the proposed method can be used to generate answers covering all alternatives discussed in the protocol guidance document.

At the same time as the system asking for clarification, one of the parallel LLMs can interact with the EMR and retrieve all the latest patient data and store this as a meta-answer as well. Then, when the agent asks a more specific question (e.g., clarifying the previous query), the previously generated answers and the retrieved latest EMR data can be used to provide an answer. In this way, the queries of the agent can be answered in a faster manner in comparison to the typical methodology in which answers are fully generated with each query.

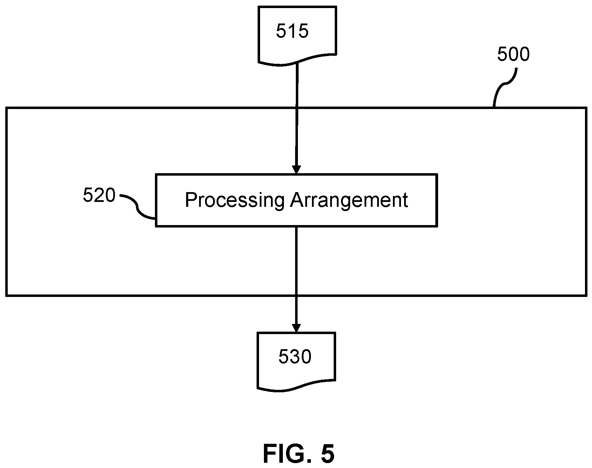

Referring now to Fig. 5, there is depicted a system 500 for answering queries according to a proposed embodiment. The system 500 comprises a processing arrangement 520.

The processing arrangement 520 can be configured to perform any of the herein-disclosed methods (e.g., method 100, 200, 300, or 400), however, in this embodiment, the processing arrangement 520 is specifically configured to perform method 100, i.e., to: provide a first query from an agent to a large language model, LLM, based model to generate a primary answer and at least one auxiliary answer; output the primary answer to the agent and storing the at least one auxiliary answer; obtain a second query from the agent; determine if at least one of the at least one auxiliary answers is relevant to the second query; and if at least one of the at least one auxiliary answers is relevant to the second query, generate and output a second answer based on said relevant at least one auxiliary answer to the agent and storing any remaining auxiliary answers. The input 515 of the system is thus the first query (and subsequently the second query), and the output 530 is the primary answer and subsequently any generated second answer.

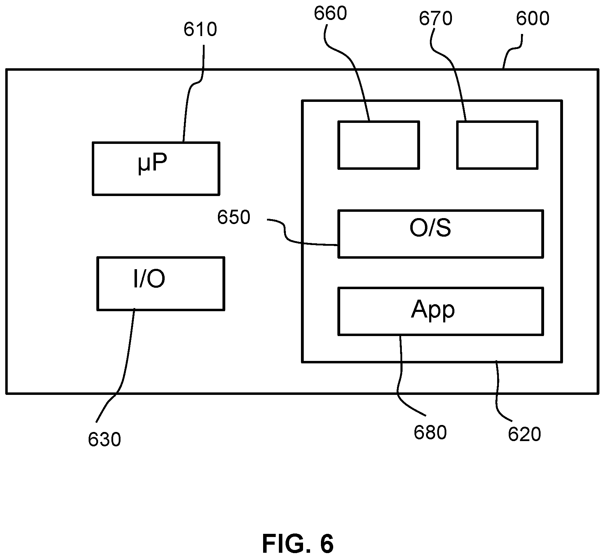

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-4, and the system of Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. **In** this regard, each block in the flowchart or block diagrams may represent a module, segment, or portion of instructions, which comprises one or more executable instructions for implementing the specified logical function(s). **In** some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for answering queries, the method comprising:
providing a first query from an agent to a large language model, LLM, based model (110) to generate a primary answer and at least one auxiliary answer;
outputting the primary answer to the agent and storing the at least one auxiliary answer (120);
obtaining a second query (130) from the agent;
determining if at least one of the at least one auxiliary answers is relevant to the second query (140); and
if at least one of the at least one auxiliary answers is relevant to the second query, generating and outputting a second answer (150) based on said relevant at least one auxiliary answer to the agent, and storing any remaining auxiliary answers.

2. The computer-implemented method of claim 1, wherein generating and outputting the second answer comprises outputting said relevant at least one auxiliary answer to the agent.

3. The computer-implemented method of claim 1, wherein the at least one auxiliary answer comprises two auxiliary answers, wherein the two auxiliary answers are both relevant to the second query, and wherein generating the second answer comprises generating a second answer based on the two relevant auxiliary answers.

4. The computer-implemented method of any prior claim, wherein the LLM based model comprises a Retrieval Augmented Generation, RAG, model comprising a plurality of LLMs.

5. The computer-implemented method of claim 4, wherein providing the first query to the RAG model to generate a primary answer and at least one auxiliary answer comprises:
retrieving a plurality of chunks (302) from at least one reference document;
modifying the first query (305) to generate a plurality of modified first queries;
providing the plurality of chunks and a different one of the plurality of modified first queries to each of the plurality of LLMs (308) to generate respective outputs; and
generating the primary answer and the at least one auxiliary answer (310) based on the generated output of each LLM.

6. The computer-implemented method of claim 4, wherein providing the first query to the RAG model to generate a primary answer and at least one auxiliary answer comprises:
retrieving a plurality of chunks (402) from at least one reference document;
clustering the plurality of chunks (405) into a plurality of clusters;
providing the first query and a different one of the plurality of clusters to each of the plurality of LLMs (408) to generate respective outputs; and
generating the primary answer and the at least one auxiliary answer (410) based on the generated output of each LLM.

7. The computer-implemented method of claim 5 or 6, wherein the primary answer comprises the generated output of a single one of the LLMs, and the at least one auxiliary answer comprises the generated output of the remaining one or more LLMs of the plurality of the LLMs.

8. The computer-implemented method of claim 5 or 6, wherein the primary answer comprises a summary of the generated outputs of the plurality of LLMs and the at least one auxiliary answer comprises the details of the generated outputs of the plurality of LLMs.

9. The computer-implemented method of claim 6, wherein the method further comprises:
selecting, by the agent, one of the plurality of clusters; and
wherein the primary answer comprises the generated output of the LLM to which the selected cluster was input, and the at least one auxiliary answer comprises the generated output of the remaining one or more LLMs of the plurality of the LLMs.

10. The computer-implemented method of any of claims 5 to 9, wherein a conversation history between the RAG model and the agent is further provided to each of the plurality of LLMs to generate the respective outputs.

11. The computer-implemented method of any of claims 6 to 10, wherein clustering the plurality of chunks (405) comprises: performing natural language processing on the chunks to determine the semantic content of each chunk; and clustering the plurality of chunks based on the semantic content of each chunk.

12. The computer-implemented method of any prior claim, wherein determining if at least one of the at least one auxiliary answers is relevant to the second query comprises:
performing a keyword search on each of the at least one auxiliary answers based on the second query.

13. The computer-implemented method of any of claims 1 to 11, wherein determining if at least one of the at least one auxiliary answers is relevant to the second query comprises:
performing natural language processing (235) on each of the at least one auxiliary answers and the second query to determine, for each of the at least one auxiliary answers, a similarity score indicating the semantic similarity between said auxiliary answer and the second query; and
determining if at least one of the at least one auxiliary answers is relevant to the second query (240) based on their respective similarity scores.

14. A computer program product comprising computer program code means which, when executed on a computing device having a processing system, cause the processing system to perform all of the steps of the computer-implemented method according to any of claims 1 to 13.

15. A system (500) for answering queries, the system comprising:
a processing arrangement (520) configured to:
provide a first query from an agent to a large language model, LLM, based model to generate a primary answer and at least one auxiliary answer;
output the primary answer to the agent and storing the at least one auxiliary answer;
obtain a second query from the agent;
determine if at least one of the at least one auxiliary answers is relevant to the second query; and
if at least one of the at least one auxiliary answers is relevant to the second query, generate and output a second answer based on said relevant at least one auxiliary answer to the agent and storing any remaining auxiliary answers.
